# EUROPEAN PATENT APPLICATION

(11) **EP 4 712 682 A1**
(43) Date of publication of application: **18.03.2026**
(21) Application number: 24802798.9
(22) Date of filing: 26.04.2024
(51) Int. Cl.: H04W 76/40, H04W 76/11, H04W 76/27, H04W 4/06

(54) **MULTICAST SESSION TRANSMISSION METHOD AND APPARATUS, DEVICE, AND MEDIUM**

(30) Priority: 11.05.2023 CN 202310527618
(71) Applicant: Datang Mobile Communications Equipment Co., Ltd., Beijing 100085 (CN)
(72) Inventor: ZHOU, Rui, Beijing 100085 (CN); ZENG, Erlin, Beijing 100085 (CN)
(74) Representative: Studio Torta S.p.A.
(86) International application number: PCT/CN2024/089996
(87) International publication number: WO 2024/230513

(57) **Abstract**

The present disclosure provides a multicast session transmission method, device, equipment and medium, and relates to the technical field of communications, which solves the problem of lack of flexible control on a state in which UE receives a multicast session in the related art. The method of the present disclosure includes: receiving a multicast session activation notification message transmitted by a network device; receiving a multicast session in a target RRC state, according to a multicast session reception mode, or a multicast session reception mode and the multicast session activation notification message; wherein the multicast session reception mode is indicated by the network device or agreed upon by a protocol.

## Description

The present application is filed based on and claims the priority of Chinese Application No. 202310527618.2 filed on May 11, 2023, entitled "multicast session transmission method, device, equipment and medium", the disclosure of which are incorporated in their entireties by reference herein.

### TECHNICAL FIELD

The present disclosure relates to the field of communication technologies, and in particular, to a multicast session transmission method, device, equipment and medium.

### BACKGROUND

At present, reception of multicast sessions in multicast broadcast services (MBS) has been further enhanced. Considering support for large-scale user equipment (UEs) to receive multicast services and solutions to possible network congestion problems, the function of UEs receiving multicast sessions in a radio resource control (RRC) inactive state is introduced. That is, when a multicast session is activated, the network will indicate to the UE whether the multicast session can be received in the inactive state. According to a received network indication, the UE chooses to receive the multicast session in the RRC inactive state or request to enter an RRC connected state to receive the multicast session.

In real-world scenarios, there are some UEs which have high requirements for transmission quality of multicast data or which have requirements for uplink during reception of multicast services. During reception of multicast sessions, these UEs must be in a connected state and use a connected-mode multicast session to receive multicast sessions. In addition, based on congestion control considerations, the network may also expect that some UEs always perform reception in a connected state, while other UEs can be further controlled to perform reception in an inactive state. However, current related technologies lack corresponding control methods to address the above requirements.

### SUMMARY

An object of the present disclosure is to provide a multicast session transmission method, device, equipment and medium, which can solve the problem of lack of flexible control on a state in which UE receives a multicast session in the related art.

In order to achieve the above objective, in a first aspect, one embodiment of the present disclosure provides a multicast session transmission method, applied to a user equipment (UE), the method includes:
receiving a multicast session activation notification message transmitted by a network device;
receiving a multicast session in a target RRC state, according to a multicast session reception mode, or a multicast session reception mode and the multicast session activation notification message; where the multicast session reception mode is indicated by the network device or agreed upon by a protocol.

In some embodiments, the multicast session activation notification message includes at least one of the following information:
first information used to indicate a state change of the multicast session;
a second information used to indicate monitoring of a group radio network temporary identifier (G-RNTI).

In some embodiments, the multicast session reception mode includes one or more of: an RRC connected state mode or a dynamic control mode;
the RRC connected state mode is used to indicate the UE to receive the multicast session in the RRC connected state;
the dynamic control mode is used to indicate the UE to receive the multicast session in an indicated target RRC state, according to an indication of the multicast session activation notification message.

In some embodiments, the method further includes:
receiving indication information transmitted by the network device; where the indication information is used to indicate a multicast session reception mode.

In some embodiments, the receiving the indication information transmitted by the network device, includes:
receiving an RRC message transmitted by a network device; where the RRC message includes the indication information; or,
receiving a medium access control protocol control element (MAC CE) transmitted by the network device; where the MAC CE includes the indication information.

In some embodiments, the receiving a multicast session in a target RRC state, according to a multicast session reception mode, includes:
in case that the multicast session reception mode is an RRC connected state mode, entering an RRC connected state from an RRC inactive state, and receiving the multicast session in the RRC connected state.

In some embodiments, the receiving a multicast session in a target RRC state, according to a multicast session reception mode and the multicast session activation notification message, includes:
in case that the multicast session reception mode is a dynamic control mode, receiving the multicast session in the target RRC state, according to the session activation notification message.

In some embodiments, the multicast session reception mode is for one multicast session or for all multicast sessions.

In some embodiments, the receiving a multicast session in a target RRC state, according to a multicast session reception mode, or a multicast session reception mode and the multicast session activation notification message, includes:
in case that no indication information transmitted by the network device is received, receiving the multicast session in the target RRC state, according to a multicast session reception mode agreed upon in the protocol, or the multicast session reception mode agreed upon in the protocol and the multicast session activation notification message; where the indication information is used to indicate the multicast session reception mode.

In a second aspect, one embodiment of the present disclosure provides a multicast session transmission method, applied to a network device, including:
transmitting indication information to a UE; where the indication information is used to indicate a multicast session reception mode.

In some embodiments, the transmitting indication information to a UE, includes:
transmitting an RRC message to the UE; where the RRC message includes the indication information; or,
transmitting a media access control element MAC CE to the UE; where the MAC CE includes the indication information.

In some embodiments, the method further includes:
transmitting a multicast session activation notification message to the UE.

In some embodiments, the multicast session activation notification message includes but is not limited to at least one of the following information:
first information used to indicate a state change (e.g., activation) of a multicast session;
a second information used to indicate monitoring of a group radio network temporary identifier (G-RNTI).

In some embodiments, the multicast session reception mode includes one or more of: an RRC connected state mode or a dynamic control mode;
the RRC connected state mode is used to indicate the UE to receive a multicast session in the RRC connected state; that is, at this point, the target RRC state is the RRC connected state;
the dynamic control mode is used to indicate the UE to receive a multicast session in an indicated target RRC state, according to an indication of the multicast session activation notification message.

In some embodiments, the multicast session reception mode is for one multicast session or for all multicast sessions.

In a third aspect, one embodiment of the present disclosure provides a user equipment (UE), including: a memory, a transceiver, and a processor; wherein the memory is used to store a program instruction; the transceiver is used to send and receive data under control of the processor; the processor is used to read the program instruction in the memory and perform the following operations:
receiving, through the transceiver, a multicast session activation notification message transmitted by a network device;
receiving a multicast session in a target RRC state, according to a multicast session reception mode, or a multicast session reception mode and the multicast session activation notification message; where the multicast session reception mode is indicated by the network device or agreed upon by a protocol.

In some embodiments, the multicast session activation notification message includes at least one of the following information:
first information used to indicate a state change of the multicast session;
a second information used to indicate monitoring of a group radio network temporary identifier (G-RNTI).

In some embodiments, the multicast session reception mode includes one or more of: an RRC connected state mode or a dynamic control mode;
the RRC connected state mode is used to indicate the UE to receive the multicast session in the RRC connected state;
the dynamic control mode is used to indicate the UE to receive the multicast session in an indicated target RRC state, according to an indication of the multicast session activation notification message.

In some embodiments, the transceiver is further used to:
receive indication information transmitted by the network device; where the indication information is used to indicate a multicast session reception mode.

In some embodiments, the transceiver is further used to:
receive an RRC message transmitted by the network device; where the RRC message includes the indication information; or,
receive a medium access control protocol control element (MAC CE) transmitted by the network device; where the MAC CE includes the indication information.

In some embodiments, the processor is further used to:
in case that the multicast session reception mode is an RRC connected state mode, enter an RRC connected state from an RRC inactive state, and
receive the multicast session in the RRC connected state through the transceiver.

In some embodiments, the processor is further used to:
in case that the multicast session reception mode is a dynamic control mode, receive the multicast session in the target RRC state through the transceiver, according to the session activation notification message.

In some embodiments, the multicast session reception mode is for one multicast session or for all multicast sessions.

In some embodiments, the processor is further used to:
in case that no indication information transmitted by the network device is received, receive the multicast session in the target RRC state through the transceiver, according to a multicast session reception mode agreed upon in the protocol, or the multicast session reception mode agreed upon in the protocol and the multicast session activation notification message; where the indication information is used to indicate the multicast session reception mode.

In a fourth aspect, one embodiment of the present disclosure provides a multicast session transmission device, including:
a first receiving unit used to receive a multicast session activation notification message transmitted by a network device;
a second receiving unit used to receive a multicast session in a target RRC state, according to a multicast session reception mode, or a multicast session reception mode and the multicast session activation notification message; where the multicast session reception mode is indicated by the network device or agreed upon by a protocol.

In a fifth aspect, one embodiment of the present disclosure provides a network device, including: a memory, a transceiver, and a processor; wherein the memory is used to store a program instruction; the transceiver is used to send and receive data under control of the processor; the processor is used to read the program instruction in the memory and perform the following operations:
transmitting indication information to a UE through the transceiver; where the indication information is used to indicate a multicast session reception mode.

In some embodiments, the transceiver is further used to:
transmit an RRC message to the UE; where the RRC message includes the indication information; or,
transmit a media access control element MAC CE to the UE; where the MAC CE includes the indication information.

In some embodiments, the transceiver is further used to:
transmit a multicast session activation notification message to the UE.

In some embodiments, the multicast session activation notification message includes but is not limited to at least one of the following information:
first information used to indicate a state change (e.g., activation) of a multicast session;
a second information used to indicate monitoring of a group radio network temporary identifier (G-RNTI).

In some embodiments, the multicast session reception mode includes one or more of: an RRC connected state mode or a dynamic control mode.

The RRC connected state mode is used to indicate the UE to receive a multicast session in the RRC connected state.

The dynamic control mode is used to indicate the UE to receive a multicast session in an indicated target RRC state, according to an indication of the multicast session activation notification message.

In some embodiments, the multicast session reception mode may be for one multicast session or for all multicast sessions.

In a sixth aspect, one embodiment of the present disclosure provides a multicast session transmission device, including:
a first transmission unit used to transmit indication information to a UE; where the indication information is used to indicate a multicast session reception mode.

In a seventh aspect, one embodiment of the present disclosure provides a processor-readable storage medium, including a computer program stored thereon; wherein the computer program is used to cause a processor to execute steps of the multicast session transmission method in the first aspect, or to execute steps of the multicast session transmission method in the second aspect.

The technical solutions of the present disclosure provide at least the following beneficial effects.

According to the technical solutions of the embodiment of the present disclosure, a multicast session activation notification message transmitted by a network device is received, and a multicast session is received in a target RRC state, according to a multicast session reception mode, or a multicast session reception mode and the multicast session activation notification message, where the multicast session reception mode is indicated by the network device or agreed upon by a protocol. Through the above processing, it can flexibly control the state in which the UE receives the multicast session, thereby being able to regulate network congestion.

### BRIEF DESCRIPTION OF THE DRAWINGS

FIG. 1 is a first flow chart of a multicast session transmission method according to an embodiment of the present disclosure;
FIG. 2 is a second flow chart of a multicast session transmission method according to an embodiment of the present disclosure;
FIG. 3 is a schematic diagram of a user equipment according to an embodiment of the present disclosure;
FIG. 4 is a first schematic diagram showing modules of a multicast session transmission device according to an embodiment of the present disclosure;
FIG. 5 is a schematic diagram of a network device according to an embodiment of the present disclosure; and
FIG. 6 is a second schematic diagram showing modules of a multicast session transmission device according to an embodiment of the present disclosure.

### DETAILED DESCRIPTION

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

In order to facilitate understanding of the solutions of the present disclosure, relevant contents involved in the present disclosure are first introduced.

As an important service type, multimedia broadcast multicast service (MBMS) has existed for a long time in the 3rd generation mobile communication technology (3G) and the 4th generation mobile communication technology (4G). However, the 5th generation mobile communication technology (5G) new radio (NR) R15 and R16 versions only support unicast services. In the R17 version, NR MBS is introduced for the first time, which divides MBS into multicast services (carried on multicast sessions; hereinafter, multicast service and multicast session are collectively referred to as multicast session) and broadcast services. A user equipment (UE) in any RRC state can receive broadcast services. As for the multicast service, it is only supported for reception by UEs in an RRC connected state.

In the R18 version, reception of multicast sessions in NR MBS is further enhanced. Considering support for large-scale UEs to receive multicast services and solutions to possible network congestion problems, the function of UEs receiving multicast sessions in an RRC inactive state is introduced. The specific function is that in R18 MBS, for a specific multicast session, the network can control whether it can be received in a connected state or in an inactive state, based on various considerations. Therefore, when a multicast session is activated, the network will indicate to the UE whether the multicast session can be received in the inactive state. According to a received network indication, the UE chooses to receive the multicast session in the RRC inactive state or request to enter an RRC connected state to receive the multicast session.

Compared to the connected-state multicast session reception in the R17 version, the RRC inactive multicast session reception supported in the R18 version lacks some guarantees on transmission reliability of service data (such as point to point (PTP), hybrid automatic repeat request (HARQ) feedback, etc.). As a result, it cannot always achieve the same transmission quality as the connected-state multicast reception in the R17 version.

In real-world scenarios, there are some UEs which have high requirements for transmission quality of multicast data or which have requirements for uplink during reception of multicast services. During reception of multicast sessions, these UEs must be in a connected state and use a connected-mode multicast session in the R17 version to receive multicast sessions. In addition, based on congestion control considerations, the network may also expect that some UEs always perform reception in a connected state, while other UEs can be further controlled to perform reception in an inactive state. However, current related technologies lack corresponding control methods to address the above requirements.

In order to solve the above technical problems, the embodiments of the present disclosure provide a multicast session transmission method, device, equipment and medium. The method and devices are based on the same application concept. Since the principles of solving the problems by the method and device are similar, implementation of the device and method can refer to each other, and the repeated parts will not be repeated.

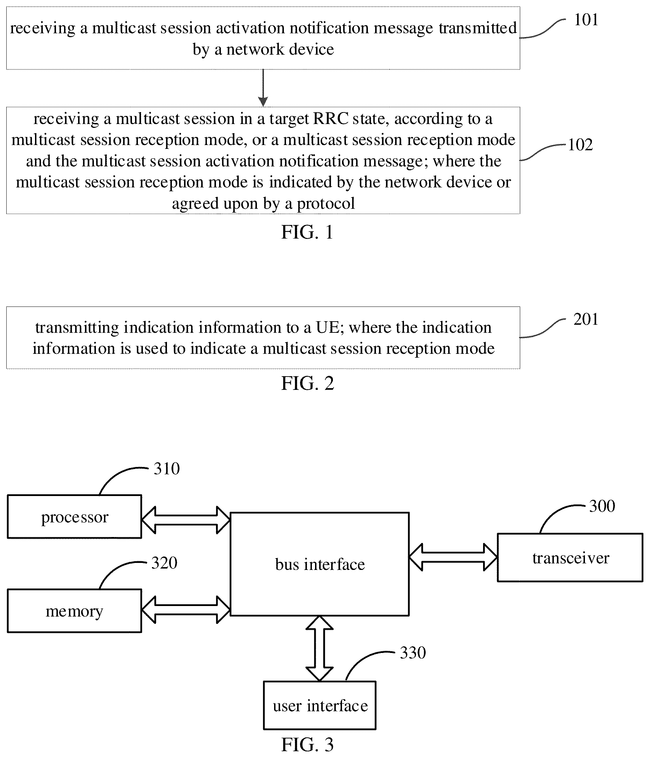

As shown in FIG. 1, which is a flow chart of a multicast session transmission method according to an embodiment of the present disclosure. The method is applied to UE, and includes:
Step 101: receiving a multicast session activation notification message transmitted by a network device.

It is to be noted that the UE performing the method is a UE which supports functionality for receiving multicast services in an RRC inactive state.

When the UE receives the multicast session activation notification message transmitted by the network device, it indicates that the multicast session is activated and multicast session transmission is to be performed.

In some embodiments, the multicast session activation notification message is a group paging message.

In some embodiments, the multicast session activation notification message includes but is not limited to at least one of the following information:
first information used to indicate a state change (e.g., activation) of a multicast session;
a second information used to indicate monitoring of a group radio network temporary identifier (G-RNTI).

Step 102: receiving a multicast session in a target RRC state, according to a multicast session reception mode, or a multicast session reception mode and the multicast session activation notification message; where the multicast session reception mode is indicated by the network device or agreed upon by a protocol.

In some embodiments, the multicast session reception mode includes one or more of: an RRC connected state mode or a dynamic control mode.

The RRC connected state mode is used to indicate the UE to receive a multicast session in the RRC connected state; that is, at this point, the target RRC state is the RRC connected state.

The dynamic control mode is used to indicate the UE to receive a multicast session in an indicated target RRC state, according to an indication of the multicast session activation notification message.

It is to be noted that when the multicast session reception mode is the RRC connected state mode (also known as R17 mode), the multicast session is received in the RRC connected state according to the multicast session reception mode.

When the multicast session reception mode is the dynamic control mode (also called R18 mode), the multicast session is received in the target RRC state according to the multicast session reception mode and the multicast session activation notification message. At this point, the target RRC state is determined based on the indication in the multicast session activation notification message.

Here, the multicast session reception mode may be for one multicast session or for all multicast sessions.

According to the multicast session transmission method of the embodiment of the present disclosure, by receiving a multicast session activation notification message transmitted by a network device, and receiving a multicast session in a target RRC state, according to a multicast session reception mode, or a multicast session reception mode and the multicast session activation notification message, where the multicast session reception mode is indicated by the network device or agreed upon by a protocol, through the above processing, it can flexibly control the state in which the UE receives the multicast session, thereby being able to regulate network congestion.

In some embodiments, the method of the present disclosure may further include:
receiving indication information transmitted by a network device; where the indication information is used to indicate a multicast session reception mode.

It is to be noted that after receiving the indication information transmitted by the network device, the UE saves the indication information in order to record the multicast session reception mode indicated by the network device.

Specifically, the receiving the indication information transmitted by the network device may include:
receiving an RRC message transmitted by a network device; where the RRC message includes the indication information; or,
receiving a medium access control protocol control element (MAC CE) transmitted by the network device; where the MAC CE includes the indication information.

That is, the network device can indicate the multicast session reception mode through an RRC message or an MAC CE.

In some embodiments, in the above step 102, the receiving the multicast session in a target RRC state according to the multicast session reception mode, includes:
in case that the multicast session reception mode is an RRC connected state mode, entering an RRC connected state from an RRC inactive state, and receiving the multicast session in the RRC connected state.

Specifically, in case that the multicast session reception mode is the RRC connected state mode, the UE in the RRC inactive state requests to enter the RRC connected state, and receives the multicast session in the RRC connected state.

This embodiment can meet the needs of UEs which have high requirements for transmission quality of multicast data or which have requirements for uplink during reception of multicast services, or UEs which are expected by the network to always perform reception in the RRC connected state for congestion control purposes.

In some embodiments, in the above step 102, the receiving a multicast session in a target RRC state, according to a multicast session reception mode and the multicast session activation notification message, includes:
in case that the multicast session reception mode is a dynamic control mode, receiving the multicast session in the target RRC state, according to the session activation notification message.

Specifically, in case that the multicast session reception mode is the dynamic control mode, indication of the session activation notification message is followed, if it is indicated that the multicast session can be received in the RRC inactive state, the multicast session is started to be received in the RRC inactive state or the G-RNTI of the multicast session is started to be monitored.

If it is indicated that the multicast session can be received only in the RRC connected state, the UE enters the RRC connected state and receives the multicast session in the RRC connected state.

In some embodiments, the above step 102 may include:
in case that no indication information transmitted by the network device is received, receiving the multicast session in the target RRC state, according to a multicast session reception mode agreed upon in the protocol, or the multicast session reception mode agreed upon in the protocol and the multicast session activation notification message; where the indication information is used to indicate the multicast session reception mode.

That is, in case that no indication information is received from the network device, the multicast session mode agreed upon in the protocol (i.e., the multicast session mode set by default) is followed; if the multicast session mode agreed upon in the protocol is the RRC connected state mode, the multicast session is received in the RRC connected state.

If the multicast session mode agreed in the protocol is a dynamic control mode, then the indication of the session activation notification message is followed; if it is indicated that the multicast session can be received in the RRC inactive state, then the multicast session is started to be received in the RRC inactive state or the G-RNTI of the multicast session is started to be monitored.

According to the multicast session transmission method of the embodiment of the present disclosure, by receiving a multicast session activation notification message transmitted by a network device, and receiving a multicast session in a target RRC state, according to a multicast session reception mode, or a multicast session reception mode and the multicast session activation notification message, where the multicast session reception mode is indicated by the network device or agreed upon by a protocol, through the above processing, it can flexibly control the state in which the UE receives the multicast session, thereby being able to regulate network congestion.

As shown in FIG. 2, which is a flow chart of a multicast session transmission method according to an embodiment of the present disclosure. The method is applied to a network device, and includes:
Step 201: transmitting indication information to a UE; where the indication information is used to indicate a multicast session reception mode.

It is to be noted that the UE is a UE which supports functionality for receiving multicast services in an RRC inactive state.

Here, the network device transmits indication information to the UE, so that the UE receives the multicast session in the target RRC state according to the multicast session reception mode indicated by the network device. In this way, through indication of the network, it can flexibly control the state in which the UE receives the multicast session, thereby regulating network congestion.

In some embodiments, the multicast session reception mode includes one or more of an RRC connected state mode or a dynamic control mode.

The RRC connected state mode is used to indicate the UE to receive a multicast session in the RRC connected state; that is, at this point, the target RRC state is the RRC connected state.

The dynamic control mode is used to indicate the UE to receive a multicast session in an indicated target RRC state, according to an indication of the multicast session activation notification message.

In some embodiments, the above step 201 may include:
transmitting an RRC message to the UE; where the RRC message includes the indication information; or,
transmitting a media access control element MAC CE to the UE; where the MAC CE includes the indication information.

That is, the network device can indicate the multicast session reception mode through an RRC message or an MAC CE.

In some embodiments, the method of the present disclosure further includes:
transmitting a multicast session activation notification message to the UE.

It is to be noted that when the network device transmits a multicast session activation notification message to the UE, it indicates that the multicast session is activated and a multicast session transmission is to be performed. Moreover, in some cases, the multicast session activation notification message transmitted by the network device and the indicated multicast session reception mode jointly determine in which state the UE receives the multicast session.

In some embodiments, the multicast session activation notification message is a group paging message.

In some embodiments, the multicast session activation notification message includes but is not limited to at least one of the following information:
first information used to indicate a state change (e.g., activation) of a multicast session;
a second information used to indicate monitoring of a group radio network temporary identifier (G-RNTI).

In some embodiments, the multicast session reception mode may be for one multicast session or for all multicast sessions.

According to the multicast session transmission method of the embodiment of the present disclosure, indication information is transmitted to the UE, where the indication information is used to indicate the multicast session reception mode, so that the UE receives the multicast session in the target RRC state according to the multicast session reception mode indicated by the network device. In this way, through indication of the network, it can flexibly control the state in which the UE receives the multicast session, thereby regulating network congestion.

The specific implementation of the multicast session transmission method disclosed in the present disclosure is described whereinafter with several examples.

### Example 1

At step 1, UE which supports functionality for receiving multicast services in an RRC inactive state, in an RRC connected state, reports capability of supporting reception of multicast services in the RRC inactive state, to the network device; the network device transmits indication information to the UE which supports functionality for receiving multicast services in the RRC inactive state, where the indication information is used to indicate a multicast session reception mode.

The multicast session reception mode indication includes but is not limited to one of the following:
multicast reception mode (e.g., RRC connected mode or dynamic control mode);
indicating an RRC connected mode only to specific UE which supports functionality for receiving multicast services in an RRC inactive state;
indicating a dynamic control mode only to specific UE.

At step 2, the UE receives and saves the indication information.

At step 3, the UE is released by the network to the RRC inactive state.

At step 4, when a multicast session is activated, the network device transmits a multicast session activation notification message (e.g., group paging message) to UEs; for UE in the RRC inactive state, if the multicast reception mode saved by the UE indicates the RRC connected state mode, the UE enters the RRC connected state to receive the multicast session. If the multicast reception mode saved by the UE indicates the dynamic control mode, the UE further follows the indication in the multicast session activation notification message (e.g., group paging message):
a) if the multicast session can be received in the RRC inactive state, the UE starts receiving the multicast session or starts monitoring the G-RNTI of the multicast session in the RRC inactive state;
b) if the multicast session can be received only in the RRC connected state, the UE enters the connected state to receive the multicast session.

Embodiment 2: when a UE which supports functionality for receiving multicast services in an RRC inactive state, in an RRC connected state, does not receive a multicast session reception mode indicated by the network, the UE receives the multicast session according to an RRC connected state mode agreed in the protocol.

At step 1, under network control, a UE which supports functionality for receiving multicast services in an RRC inactive state, switches from the RRC connected state to the RRC inactive state.

Since no multicast session mode indication is received from the network, according to an RRC connected state mode agreed upon in the protocol, the UE receives the multicast session in the RRC connected state.

At step 2, when a multicast session is activated, the network device transmits a session activation notification message (e.g., a group paging message) to UEs. The UE in the RRC inactive state, determines that its multicast session reception mode is the RRC connected state mode, and then enters the RRC connected state to receive the multicast session.

Embodiment 3: when a UE which supports functionality for receiving multicast services in an RRC inactive state, in an RRC connected state, does not receive a multicast session reception mode indicated by the network, the UE receives the multicast session according to a dynamic control mode agreed in the protocol.

At step 1, under network control, a UE which supports functionality for receiving multicast services in an RRC inactive state, switches from the RRC connected state to the RRC inactive state.

Since no multicast session mode indication is received from the network, according to the dynamic control mode agreed upon in the protocol, the UE receives the multicast session in the RRC connected state.

At step 2, when a multicast session is activated, the network device transmits a session activation notification message (e.g., a group paging message) to the UE. The UE in the RRC inactive state, determines that its multicast session reception mode is the dynamic control mode, and then follows indication of the session activation notification message:
a) if the multicast session can be received in the RRC inactive state, the UE starts receiving the multicast session or starts monitoring the G-RNTI of the multicast session in the RRC inactive state;
b) if the multicast session can be received only in the RRC connected state, the UE enters the connected state to receive the multicast session.

As shown in FIG. 3, one embodiment of the present disclosure further provides a user equipment (UE), which includes a memory 320, a transceiver 300, and a processor 310. The memory 320 is used to store a program instruction; the transceiver 300 is used to send and receive data under the control of the processor 310. The processor 310 is used to read the program instruction in the memory 320 and perform the following operations:
receiving, through the transceiver 300, a multicast session activation notification message transmitted by a network device;
receiving a multicast session in a target RRC state, according to a multicast session reception mode, or a multicast session reception mode and the multicast session activation notification message; where the multicast session reception mode is indicated by the network device or agreed upon by a protocol.

In FIG. 3, a bus architecture may include any number of interconnected bus and bridge. Specifically, various circuits of one or more processors, which are represented by the processor 310, and one or more memories, which are represented by the memory 320, are linked together. The bus architecture may link various other circuits, such as a peripheral device, voltage regulator and a power management circuit together. These features are well known in this field; therefore, this disclosure does not make further description on these features. The bus interface provides an interface. The transceiver 300 may be multiple elements, including a transmitter and a receiver and provide units, which communicate with other devices on the transmission medium. The transmission medium includes radio channels, wired channels, optical cables, etc. For different UEs, a user interface 330 may be an interface that can be connected to external or internal devices. The connected devices include but are not limited to a small keyboard, a display, a speaker, a microphone, a joystick, etc.

The processor 310 is responsible for managing the bus architecture and the normal processing. The memory 320 may be used to store data used by the processor 310 for performing operations.

In some embodiments, the processor 310 may be a central processing unit (CPU), an application specific integrated circuit (ASIC), a field-programmable gate array (FPGA) or a complex programmable logic device (CPLD). The processor 310 may also adopt multi-core architecture.

The processor 310 calls the computer program stored in the memory to execute any method provided in the embodiment of the present disclosure according to obtained executable instructions. The processor 310 and the memory 320 may also be arranged physically separately.

In some embodiments, the multicast session activation notification message includes at least one of the following information:
first information used to indicate a state change (e.g., activation) of a multicast session;
a second information used to indicate monitoring of a group radio network temporary identifier (G-RNTI).

In some embodiments, the multicast session reception mode includes one or more of: an RRC connected state mode or a dynamic control mode.

The RRC connected state mode is used to indicate the UE to receive a multicast session in the RRC connected state.

The dynamic control mode is used to indicate the UE to receive a multicast session in an indicated target RRC state, according to an indication of the multicast session activation notification message.

In some embodiments, the transceiver 300 is further used to:
receive indication information transmitted by a network device; where the indication information is used to indicate a multicast session reception mode.

In some embodiments, the transceiver 300 is further used to:
receive an RRC message transmitted by a network device; where the RRC message includes the indication information;
   or,
receive a medium access control protocol control element (MAC CE) transmitted by the network device; where the MAC CE includes the indication information.

In some embodiments, the processor 310 is further used to:
in case that the multicast session reception mode is an RRC connected state mode, enter an RRC connected state from an RRC inactive state, and
receive the multicast session in the RRC connected state through the transceiver 300.

In some embodiments, the processor 310 is further used to:
in case that the multicast session reception mode is a dynamic control mode, receive the multicast session in the target RRC state through the transceiver 300, according to the session activation notification message.

In some embodiments, the multicast session reception mode is for one multicast session or all multicast sessions.

In some embodiments, the processor 310 is further used to:
in case that no indication information transmitted by the network device is received, receive the multicast session in the target RRC state through the transceiver 300, according to a multicast session reception mode agreed upon in the protocol, or the multicast session reception mode agreed upon in the protocol and the multicast session activation notification message; where the indication information is used to indicate the multicast session reception mode.

According to the UE of the embodiment of the present disclosure, by receiving a multicast session activation notification message transmitted by a network device, and receiving a multicast session in a target RRC state, according to a multicast session reception mode, or a multicast session reception mode and the multicast session activation notification message, where the multicast session reception mode is indicated by the network device or agreed upon by a protocol, through the above processing, it can flexibly control the state in which the UE receives the multicast session, thereby being able to regulate network congestion.

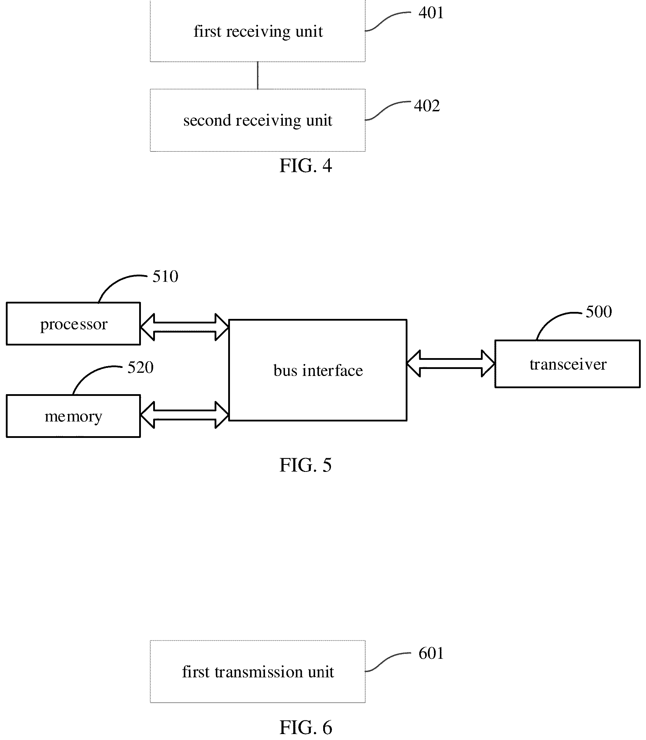

As shown in FIG. 4, one embodiment of the present disclosure further provides a multicast session transmission device, which includes:
a first receiving unit 401 used to receive a multicast session activation notification message transmitted by a network device;
a second receiving unit 402 used to receive a multicast session in a target RRC state, according to a multicast session reception mode, or a multicast session reception mode and the multicast session activation notification message; where the multicast session reception mode is indicated by the network device or agreed upon by a protocol.

In some embodiments, the multicast session activation notification message includes at least one of the following information:
first information used to indicate a state change (e.g., activation) of a multicast session;
a second information used to indicate monitoring of a group radio network temporary identifier (G-RNTI).

In some embodiments, the multicast session reception mode includes one or more of: an RRC connected state mode or a dynamic control mode.

The RRC connected state mode is used to indicate the UE to receive a multicast session in the RRC connected state.

The dynamic control mode is used to indicate the UE to receive a multicast session in an indicated target RRC state, according to an indication of the multicast session activation notification message.

In some embodiments, the device further includes
a third receiving unit used to receive indication information transmitted by a network device; where the indication information is used to indicate a multicast session reception mode.

In some embodiments, the third receiving unit is further used to:
receive an RRC message transmitted by a network device; where the RRC message includes the indication information;
   or,
receive a medium access control protocol control element (MAC CE) transmitted by the network device; where the MAC CE includes the indication information.

In some embodiments, the second receiving unit 402 is further used to:
in case that the multicast session reception mode is an RRC connected state mode, enter an RRC connected state from an RRC inactive state, and
receive the multicast session in the RRC connected state.

In some embodiments, the second receiving unit 402 is further used to:
in case that the multicast session reception mode is a dynamic control mode, receive the multicast session in the target RRC state, according to the session activation notification message.

In some embodiments, the multicast session reception mode is for one multicast session or all multicast sessions.

In some embodiments, the second receiving unit 402 is further used to:
in case that no indication information transmitted by the network device is received, receive the multicast session in the target RRC state, according to a multicast session reception mode agreed upon in the protocol, or the multicast session reception mode agreed upon in the protocol and the multicast session activation notification message; where the indication information is used to indicate the multicast session reception mode.

According to the multicast session transmission device of the embodiment of the present disclosure, by receiving a multicast session activation notification message transmitted by a network device, and receiving a multicast session in a target RRC state, according to a multicast session reception mode, or a multicast session reception mode and the multicast session activation notification message, where the multicast session reception mode is indicated by the network device or agreed upon by a protocol, through the above processing, it can flexibly control the state in which the UE receives the multicast session, thereby being able to regulate network congestion.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted here that the above multicast session transmission device provided in the embodiment of the present disclosure can implement all the method steps implemented in the above multicast session transmission method embodiment, and can achieve the same technical effect. The parts and beneficial effects of this embodiment that are the same as the method embodiment will not be described in detail here.

In some embodiments of the present disclosure, a processor-readable storage medium is further provided. The processor-readable storage medium stores a program instruction, and the program instruction is used to cause a processor to execute the following steps:
receiving a multicast session activation notification message transmitted by a network device;
receiving a multicast session in a target RRC state, according to a multicast session reception mode, or a multicast session reception mode and the multicast session activation notification message; where the multicast session reception mode is indicated by the network device or agreed upon by a protocol.

When the program is executed by the processor, it can implement all the implementation methods of the method embodiment applied to the UE side as shown in FIG. 1, which will not be repeated here to avoid repetition.

As shown in FIG. 5, one embodiment of the present disclosure further provides a network device, including: a memory 520, a transceiver 500 and a processor 510. The memory 520 is used to store a program instruction. The transceiver 500 is used to send and receive data under the control of the processor 510. The processor 510 is used to read the program instruction in the memory 520 and perform the following operations:
transmitting indication information to a UE through the transceiver 500; where the indication information is used to indicate a multicast session reception mode.

In FIG. 5, a bus architecture may include any number of interconnected bus and bridge. Specifically, various circuits of one or more processors, which are represented by the processor 510, and one or more memories, which are represented by the memory 520, are linked together. The bus architecture may link various other circuits, such as a peripheral device, voltage regulator and a power management circuit together. These features are well known in this field; therefore, this disclosure does not make further description on these features. The bus interface provides an interface. The transceiver 500 may be multiple elements, including a transmitter and a receiver and provide units, which communicate with other devices on the transmission medium. The transmission medium includes radio channels, wired channels, optical cables, etc. The processor 510 is responsible for managing the bus architecture and the normal processing. The memory 520 may be used to store data used by the processor 510 for performing operations.

The processor 510 may be a central processing unit (CPU), an application specific integrated circuit (ASIC), a field-programmable gate array (FPGA) or a complex programmable logic device (CPLD). The processor 510 may also adopt multi-core architecture.

In some embodiments, the transceiver 500 is further used to:
transmit an RRC message to the UE; where the RRC message includes the indication information; or,
transmit a media access control element MAC CE to the UE; where the MAC CE includes the indication information.

In some embodiments, the transceiver 500 is further used to:
transmit a multicast session activation notification message to the UE.

In some embodiments, the multicast session activation notification message includes but is not limited to at least one of the following information:
first information used to indicate a state change (e.g., activation) of a multicast session;
a second information used to indicate monitoring of a group radio network temporary identifier (G-RNTI).

In some embodiments, the multicast session reception mode includes one or more of: an RRC connected state mode or a dynamic control mode.

The RRC connected state mode is used to indicate the UE to receive a multicast session in the RRC connected state.

The dynamic control mode is used to indicate the UE to receive a multicast session in an indicated target RRC state, according to an indication of the multicast session activation notification message.

In some embodiments, the multicast session reception mode may be for one multicast session or for all multicast sessions.

According to the network device of the embodiment of the present disclosure, indication information is transmitted to the UE, where the indication information is used to indicate the multicast session reception mode, so that the UE receives the multicast session in the target RRC state according to the multicast session reception mode indicated by the network device. In this way, through indication of the network, it can flexibly control the state in which the UE receives the multicast session, thereby regulating network congestion.

As shown in FIG. 6, the present disclosure further provides a multicast session transmission device, which includes:
a first transmission unit 601 used to transmit indication information to a UE; where the indication information is used to indicate a multicast session reception mode.

In some embodiments, the first transmission unit 601 is specifically used to:
transmit an RRC message to the UE; where the RRC message includes the indication information; or,
transmit a media access control element MAC CE to the UE; where the MAC CE includes the indication information.

In some embodiments, the device of the present disclosure further includes:
a second transmission unit used to transmit a multicast session activation notification message to the UE.

In some embodiments, the multicast session activation notification message includes but is not limited to at least one of the following information:
first information used to indicate a state change (e.g., activation) of a multicast session;
a second information used to indicate monitoring of a group radio network temporary identifier (G-RNTI).

In some embodiments, the multicast session reception mode includes one or more of: an RRC connected state mode or a dynamic control mode.

The RRC connected state mode is used to indicate the UE to receive a multicast session in the RRC connected state.

The dynamic control mode is used to indicate the UE to receive a multicast session in an indicated target RRC state, according to an indication of the multicast session activation notification message.

In some embodiments, the multicast session reception mode may be for one multicast session or for all multicast sessions.

According to the multicast session transmission device of the embodiment of the present disclosure, indication information is transmitted to the UE, where the indication information is used to indicate the multicast session reception mode, so that the UE receives the multicast session in the target RRC state according to the multicast session reception mode indicated by the network device. In this way, through indication of the network, it can flexibly control the state in which the UE receives the multicast session, thereby regulating network congestion.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

It is to be noted here that the above multicast session transmission device provided in the embodiment of the present disclosure can implement all the method steps implemented in the above multicast session transmission method embodiment, and can achieve the same technical effect. The parts and beneficial effects of this embodiment that are the same as the method embodiment will not be described in detail here.

In some embodiments of the present disclosure, a processor-readable storage medium is further provided. The processor-readable storage medium stores a program instruction, and the program instruction is used to cause a processor to execute the following steps:
transmitting indication information to a UE; where the indication information is used to indicate a multicast session reception mode.

When the program is executed by the processor, it can implement all the implementation methods of the method embodiment applied to the network device side as shown in FIG. 2, which will not be repeated here to avoid repetition.

The technical solution of the embodiment of the present disclosure may be applied to various systems, especially a 5G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, or 5th-Generation (5G) New Radio (NR) system. Each of these systems includes a terminal device and a network device. Each system further includes a core network part, e.g., an Evolved Packet System (EPS) or 5G system (5GS/5GC).

The terminal device involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device involved in the embodiment of the present disclosure may be a base station which includes a plurality of cells providing services for the UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

A person skilled in the art should understand that the embodiments of this application may be provided as methods, systems, or computer program products. Therefore, the present disclosure may adopt the form of complete hardware embodiments, complete software embodiments, or embodiments combining software and hardware aspects. Moreover, the present disclosure may adopt the form of a computer program product implemented on one or more computer available storage media (including but not limited to a disk storage, an optical storage, etc.) containing computer available program code.

The present disclosure is described with reference to flowcharts and/or block diagrams of methods, devices (systems), and computer program products according to the embodiments of the present disclosure. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (ASIC), or one or more microprocessors (Digital Signal Processor, DSP), or one or more field programmable gate arrays (FPGA), etc. As another example, when a module described above is implemented in the form of scheduling program codes by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. A multicast session transmission method, applied to a user equipment (UE), comprising:
receiving a multicast session activation notification message transmitted by a network device; and
receiving a multicast session in a target radio resource control (RRC) state, according to a multicast session reception mode, or according to the multicast session reception mode and the multicast session activation notification message; wherein the multicast session reception mode is indicated by the network device or agreed upon by a protocol.

2. The method according to claim 1, wherein the multicast session activation notification message includes at least one of the following information:
a first information used to indicate a state change of the multicast session; and
a second information used to indicate monitoring of a group radio network temporary identifier (G-RNTI).

3. The method according to claim 1, wherein the multicast session reception mode includes one or more of: an RRC connected state mode, or a dynamic control mode;
the RRC connected state mode is used to indicate the UE to receive the multicast session in the RRC connected state; and
the dynamic control mode is used to indicate the UE to receive the multicast session in an indicated target RRC state, according to an indication of the multicast session activation notification message.

4. The method according to claim 1, wherein the method further includes:
receiving indication information transmitted by the network device; wherein the indication information is used to indicate the multicast session reception mode.

5. The method according to claim 4, wherein the receiving the indication information transmitted by the network device, includes:
receiving an RRC message transmitted by the network device; wherein the RRC message includes the indication information; or,
receiving a medium access control protocol control element (MAC CE) transmitted by the network device; wherein the MAC CE includes the indication information.

6. The method according to claim 1, wherein the receiving a multicast session in a target RRC state, according to a multicast session reception mode, includes:
in case that the multicast session reception mode is an RRC connected state mode, entering an RRC connected state from an RRC inactive state, and receiving the multicast session in the RRC connected state.

7. The method according to claim 1, wherein the receiving a multicast session in a target RRC state, according to a multicast session reception mode and the multicast session activation notification message, includes:
in case that the multicast session reception mode is a dynamic control mode, receiving the multicast session in the target RRC state, according to the session activation notification message.

8. The method according to claim 1, wherein the multicast session reception mode is for one multicast session or for all multicast sessions.

9. The method according to claim 1, wherein the receiving a multicast session in a target RRC state, according to a multicast session reception mode, or a multicast session reception mode and the multicast session activation notification message, includes:
in case that no indication information transmitted by the network device is received, receiving the multicast session in the target RRC state, according to a multicast session reception mode agreed upon in the protocol, or the multicast session reception mode agreed upon in the protocol and the multicast session activation notification message; wherein the indication information is used to indicate the multicast session reception mode.

10. A multicast session transmission method, applied to a network device, comprising:
transmitting indication information to a user equipment (UE); wherein the indication information is used to indicate a multicast session reception mode.

11. A user equipment (UE), comprising: a memory, a transceiver, and a processor; wherein the memory is used to store a program instruction; the transceiver is used to send and receive data under control of the processor; the processor is used to read the program instruction in the memory and perform the following operations:
receiving, through the transceiver, a multicast session activation notification message transmitted by a network device; and
receiving a multicast session in a target radio resource control (RRC) state, according to a multicast session reception mode, or according to the multicast session reception mode and the multicast session activation notification message; wherein the multicast session reception mode is indicated by the network device or agreed upon by a protocol.

12. The UE according to claim 11, wherein the multicast session activation notification message includes at least one of the following information:
a first information used to indicate a state change of the multicast session; and
a second information used to indicate monitoring of a group radio network temporary identifier (G-RNTI).

13. The UE according to claim 11, wherein the multicast session reception mode includes one or more of: an RRC connected state mode or a dynamic control mode;
the RRC connected state mode is used to indicate the UE to receive the multicast session in the RRC connected state; and
the dynamic control mode is used to indicate the UE to receive the multicast session in an indicated target RRC state, according to an indication of the multicast session activation notification message.

14. The UE according to claim 11, wherein the transceiver is further used to:
receive indication information transmitted by the network device; wherein the indication information is used to indicate the multicast session reception mode.

15. The UE according to claim 14, wherein the transceiver is further used to:
receive an RRC message transmitted by the network device; wherein the RRC message includes the indication information; or,
receive a medium access control protocol control element (MAC CE) transmitted by the network device; wherein the MAC CE includes the indication information.

16. The UE according to claim 11, wherein the processor is further used to:
in case that the multicast session reception mode is an RRC connected state mode, enter an RRC connected state from an RRC inactive state, and
receive the multicast session in the RRC connected state through the transceiver.

17. The UE according to claim 11, wherein the processor is further used to:
in case that the multicast session reception mode is a dynamic control mode, receive the multicast session in the target RRC state through the transceiver, according to the session activation notification message.

18. The UE according to claim 11, wherein the multicast session reception mode is for one multicast session or for all multicast sessions.

19. The UE according to claim 11, wherein the processor is further used to:
in case that no indication information transmitted by the network device is received, receive the multicast session in the target RRC state through the transceiver, according to a multicast session reception mode agreed upon in the protocol, or the multicast session reception mode agreed upon in the protocol and the multicast session activation notification message; wherein the indication information is used to indicate the multicast session reception mode.

20. A multicast session transmission device, comprising:
a first receiving unit used to receive a multicast session activation notification message transmitted by a network device;
a second receiving unit used to receive a multicast session in a target radio resource control (RRC) state, according to a multicast session reception mode, or the multicast session reception mode and the multicast session activation notification message; wherein the multicast session reception mode is indicated by the network device or agreed upon by a protocol.

21. The device according to claim 20, wherein the multicast session activation notification message includes at least one of the following information:
first information used to indicate a state change of the multicast session; and
a second information used to indicate monitoring of a group radio network temporary identifier (G-RNTI).

22. The device according to claim 20, wherein the multicast session reception mode includes one or more of: an RRC connected state mode or a dynamic control mode;
the RRC connected state mode is used to indicate the UE to receive the multicast session in the RRC connected state; and
the dynamic control mode is used to indicate the UE to receive the multicast session in an indicated target RRC state, according to an indication of the multicast session activation notification message.

23. The device according to claim 20, wherein the device further includes:
a third receiving unit used to receive indication information transmitted by the network device; wherein the indication information is used to indicate the multicast session reception mode.

24. The device according to claim 23, wherein the third receiving unit is further used to:
receive an RRC message transmitted by the network device; wherein the RRC message includes the indication information; or,
receive a medium access control protocol control element (MAC CE) transmitted by the network device; wherein the MAC CE includes the indication information.

25. The device according to claim 20, wherein the second receiving unit is further used to:
in case that the multicast session reception mode is an RRC connected state mode, enter an RRC connected state from an RRC inactive state, and receive the multicast session in the RRC connected state.

26. The device according to claim 20, wherein the second receiving unit is further used to:
in case that the multicast session reception mode is a dynamic control mode, receive the multicast session in the target RRC state, according to the session activation notification message.

27. The device according to claim 20, wherein the multicast session reception mode is for one multicast session or for all multicast sessions.

28. The device according to claim 20, wherein the second receiving unit is further used to:
in case that no indication information transmitted by the network device is received, receive the multicast session in the target RRC state, according to a multicast session reception mode agreed upon in the protocol, or the multicast session reception mode agreed upon in the protocol and the multicast session activation notification message; wherein the indication information is used to indicate the multicast session reception mode.

29. A network device, comprising: a memory, a transceiver, and a processor; wherein the memory is used to store a program instruction; the transceiver is used to send and receive data under control of the processor; the processor is used to read the program instruction in the memory and perform the following operations:
transmitting indication information to a UE through the transceiver; wherein the indication information is used to indicate a multicast session reception mode.

30. A multicast session transmission device, comprising:
a first transmission unit used to transmit indication information to a user equipment (UE); wherein the indication information is used to indicate a multicast session reception mode.

31. A processor-readable storage medium, comprising a computer program stored thereon; wherein the computer program is used to cause a processor to execute steps of the multicast session transmission method according to any one of claims 1 to 9, or to execute steps of the multicast session transmission method according to claim 10.
